Europäisches Patentamt

(19) European Patent Office

Office européen des brevets

(11) Publication number: **0 008 222**
**B1**

(12) **EUROPEAN PATENT SPECIFICATION**

(45) Date of publication of patent specification: **06.04.83**

(51) Int. Cl.³: **B 60 T 13/08, B 60 T 7/20**

(21) Application number: **79301594.2**

(22) Date of filing: **06.08.79**

(54) **Combined tractor and trailer coupling devices and trailer brake actuator.**

(30) Priority: **07.08.78 GB 3245178**

(43) Date of publication of application:
**20.02.80 Bulletin 80/4**

(45) Publication of the grant of the patent:
**06.04.83 Bulletin 83/14**

(84) Designated Contracting States:
**BE CH DE FR GB IT NL SE**

(56) References cited:
**DE - A - 2 052 803**
**DE - A - 2 450 181**
**FR - A - 1 604 639**
**GB - A - 758 389**
**GB - A - 1 467 541**

(73) Proprietor: **Sacol Powerline Limited**
**Commercial Road**
**Totton, Southampton SO4 3ZQ (GB)**

(72) Inventor: **Ware, Denis Ernest**
**"KYARRA" Hythe Road**
**Marchwood Southampton SO4 4WT (GB)**

(74) Representative: **Everitt, Christopher James Wilders et al,**
**F.J. CLEVELAND & COMPANY 40/43 Chancery Lane**
**London WC2A 1JQ (GB)**

Courier Press, Leamington Spa, England

## Combined tractor and trailer coupling devices and trailer brake actuator

This invention relates to combined tractor and trailer coupling devices and trailer brake actuators.

British Patent Specification No. 758389 discloses a combined tractor and trailer coupling device and trailer brake actuator comprising a casing which is for mounting on the trailer body and within which is formed a cylinder chamber which is filled with hydraulic fluid. A piston rod extends through the cylinder chamber and projects outwards from both ends of the chamber where the casing provides bearing support for it. An 'O' ring is provided between the ends of the bore of the bearing support at either end of the chamber for sealing against leakage from the chamber along the piston rod. A make up reservoir communicates with the cylinder chamber through a filler opening and is provided to make up the hydraulic fluid in the cylinder chamber and thereby replace any fluid lost through the sealing rings. A piston head is carried by the piston rod and slides within the chamber so that it divides the chamber interior into two cylinder spaces. The piston rod is hollow and its interior communicates with one of the cylinder spaces, through a hole in its surface. A plug element, which is screwed into a diametral bore in the piston rod, provides communication between the interior of the piston rod and the other cylinder space via a restricted passage and via another path which is controlled by a one-way valve. Hence movement of the piston rod relative to the casing is relatively easy in one direction and is damped in the other. Provision is made for removing the plug element from the piston rod and for withdrawing it from the chamber through the filler opening or some other aperture in the casing. The 'O' ring seals are vulnerable to damage by the edges of the holes in the piston rod which respectively receive the plug element and provide communication between the interior of the piston rod and the surrounding cylinder space. Also the outer parts of the bore of the piston rod bearing supports may require lubrication.

British Patent Specification No. 1467541 describes three forms of combined tractor and trailer coupling device and trailer brake actuator comprising a casing which is for mounting on the trailer body and within which is formed a cylinder chamber which is filled with hydraulic fluid. In each case a piston rod extends through the cylinder chamber and projects outwards from both ends, that part of the rod within the chamber being stepped and cooperating with an orifice in that chamber so that movement of the rod relative to the casing is damped in one direction. A hydraulic reservoir is provided to replace fluid lost by leakage. In one of the the forms, the rod carries lip seals at either end of portions of the rod that slide in a bore in the casing. Hence provision must be made for lubricating those rod portions. In the other two forms provision has to made to allow liquid to be displaced from the chamber to the reservoir by movement of the rod in the direction in which damping occurs.

British Patent Specification No. 1,454,628 discloses a complicated form of combined tractor and trailer coupling device and trailer brake actuator. A pair of telescopic members joined by a pin and slot lost motion connection transmit steady state towing forces. Oscillatory towing forces are damped by damping means comprising a damper piston having a piston rod which extends through one end only of a closed cylinder and which is pinned to the telescopic member in which the slot is formed, the cylinder being connected to the pin of the pin and slot lost motion connection. The telescopic member that carries the pin of the pin and slot lost motion connection also carries guides which engage the other telescopic member and which will absorb any side forces. Hence the damping means are not subjected to such side forces. A coil spring reacts against the said other telescopic member and is adapted to exert brake applying thrust via a bracket to actuate the trailer brake mechanism. Hence the damper piston does not transmit brake applying thrust.

An object of this invention is to provide a combined tractor and trailer coupling device and trailer brake actuator which incorporates hydraulic damping and which is simple, rugged and inexpensive.

According to this invention there is provided a combined tractor and trailer coupling device and trailer brake actuator comprising a casing which is for mounting on the trailer body and within which is formed a cylinder chamber; a piston rod which extends through and projects outwards from both ends of the cylinder chamber, and which has one end which is adapted to be coupled to the tractor, the other end serving as a thrust rod for actuating the trailer brake actuating mechanism; and a piston head which is carried by the piston rod within the chamber, which is a sliding fit within the chamber and which divides the chamber into a pair of cylinder spaces having substantially equal cross-sectional areas which are filled with hydraulic fluid and which communicate with one another via a hydraulic fluid flow passage of restricted dimensions through either the piston head, the piston rod or the casing; the casing forming end walls of the chamber which form spaced bearing supports for the piston rod and which carry sealing means which co-operate with a sliding surface on the piston rod to form a fluid seal at either end of the chamber; wherein the sealing means co-operate with the sliding surface on the piston rod to provide a fluid tight seal which inhibits leakage of any hydraulic fluid from the cylinder chamber so that the chamber is a closed leak proof chamber, the chamber being permanently-filled with hydraulic fluid and being bled to remove all air therefrom, the sealing means at either end of the chamber comprising an annular polyurethane lip seal which bears on the sliding surface of the piston rod and which has an annular groove formed in its side which is nearer to the chamber, said sliding surface being formed with a high quality finish so that hydraulic fluid does not leak past the lip seal. Such use of a leak proof chamber leads to the device in which this invention is embodied being simpler than, and at least as rugged as the device disclosed in British Patent Specification No. 758389 and thus reduces its cost. This is because it permits omission of a make-up reservoir and associated liquid recirculation circuit whilst the piston rod, which might be subjected to substantial lateral loads in use of the device, serves its dual role as both a drawbar and a damper piston rod.

Preferably the whole of the spaced bearing supports formed by the end walls are disposed between the sealing means carried by the end walls of the chamber and the cylinder wall of the chamber may provide a bearing support for the piston head so that the casing provides bearing support for the piston rod at three spaced locations between the sealing means carried by the end walls of the chamber. This arrangement enables each of these areas of bearing support for the piston rod to be lubricated by the hydraulic fluid within the chamber. The preferred form of sealing means carried by each end wall comprise apart from the polyurethane ring, and an annular scraper seal, the lip seal being nearer to the chamber than is the scraper seal and having its annular groove formed on its side which is nearer to the chamber, and the smaller diameter end portion of the scraper seal that bears on the piston rod being at the outer end of that scraper seal. Conveniently the surface of the piston rod upon which the polyurethane ring bears is provided with a high quality finish by being a polished surface and is preferably protected against corrosion by being formed by a plating of corrosion resistant material.

A manually operable stop may be provided and arranged to be positioned to limit movement of the piston rod in the direction to apply the trailer brake so that the trailer brake can be held released while the trailer is reversed.

The said other end of the piston rod may co-operate with a master cylinder piston which slides within a master cylinder bore, the master cylinder being a master cylinder of a hydraulic trailer brake actuating system.

Conveniently said other end of the piston rod is separate from the master cylinder piston and is adapted to abut it to impart brake applying thrust to it. A normally closed valve may be provided in a passage through the master cylinder piston, means being provided to open said valve when the tractor vehicle is being reversed. The master cylinder may comprise a coaxial pair of tubes extending between an annular end plate and an apertured end plate, the bore of the inner tube comprising the master cylinder bore and the outer tube carrying a hollow body which contains a bellows and which has apertures by which the space within it outside the bellows communicates with the annular space between the tubes, the interior of the bellows being vented to atmosphere and the space within the body outside the bellows together with the annular space serving as a reservoir of the master cylinder.

A preferred form of combined tractor and trailer coupling device and trailer brake actuator in which this invention is embodied will be described now by way of example with reference to the accompanying drawings of which:—

Figure 1 is a plan view of the combined coupling device and trailer brake actuator;

Figure 2 is a section on the line II—II of Figure 1;

Figure 3 is a fragment of Figure 2 drawn to a larger scale;

Figure 4 is a plan view of a hydraulic master cylinder fitted to a modified form of the combined coupling device and trailer brake actuator shown in Figure 1 and is drawn to a larger scale that Figure 1; and

Figure 5 is a section on the line V—V of Figure 4.

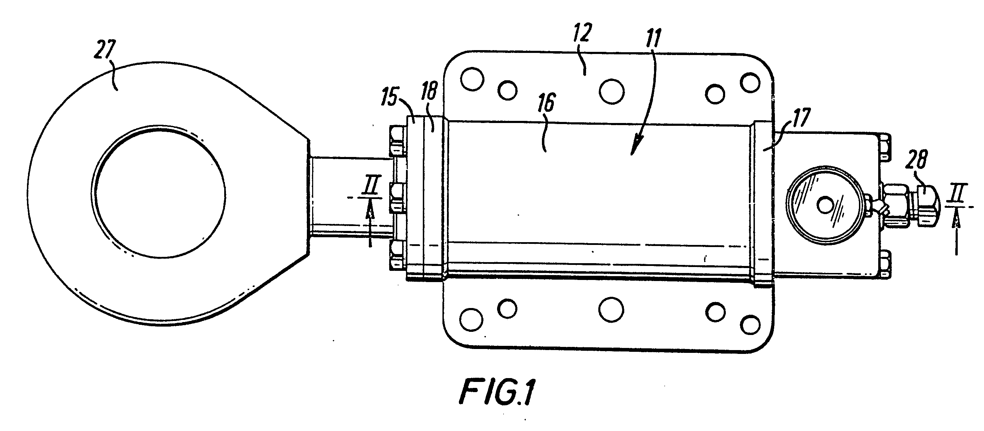

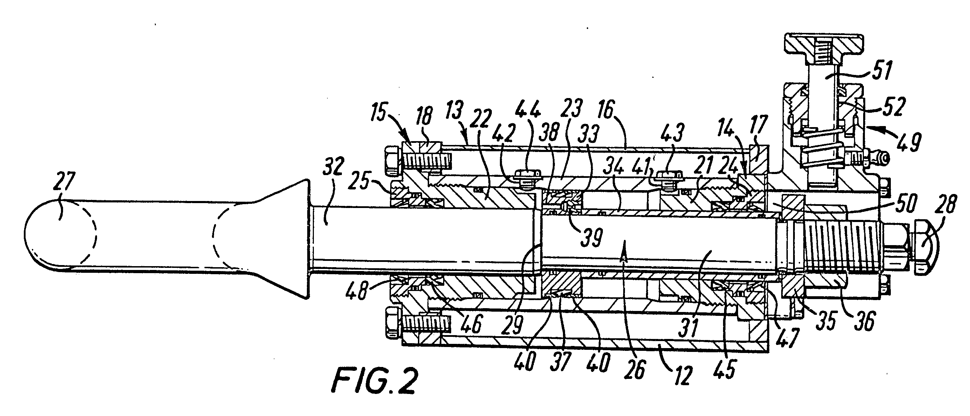

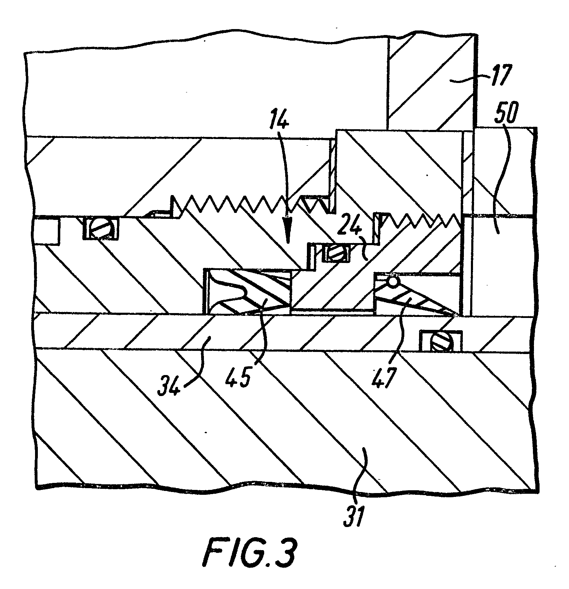

The apparatus shown in Figures 1 to 3 of the drawings comprises a casing 11 which is for mounting on the trailer body at the front of the trailer. The casing 11 comprises a base plate 12, a cover 13 and an opposed pair of apertured end fittings 14 and 15.

The cover comprises an arched length of sheet metal 16 which is secured at either end to an apertured end member and which has its longitudinal edges secured to the base plate 12 so that the base plate 12 projects on either side of it to form mounting flanges. The apertured end member 17 of the cover 13 at the rear end of the casing 11 is mounted on the upper surface of the base plate 12 at the rear end of that base plate 12. The front edge of the base plate 12 abuts and is secured to the bottom of the front apertured end member 18.

Each apertured end fitting 14, 15 is spigotted into the aperture of a respective one of the end members 17 and 18 and has a tubular portion 21, 22 which projects into the space formed between the base plate 12 and the cover 13. Hence each tubular portion 21, 22 is formed at the inner end of the respective end fitting 14, 15. The two tubular portions 21 and 22 are spigotted into the bore of a tube 23 each at a respective end of that tube 23. An annular groove is formed in that part of the outer surface of each tubular portion 21, 22 that mates with the inner surface of the tube 23 and an 'O' ring seal is accommodated in each of those grooves. The bores of the two tubular portions 21 and 22 are substantially co-axial and are of substantially the same diameter. The front end fitting 15 is fastened to the front end member 18 by setscrews. Each end of the tube 23 abuts that part of the respective end fitting 14, 15 that projects radially outwardly from the tubular portion 21, 22 at the other end of that portion 21, 22. Hence the tube 23 serves as a spacer to locate the rear end fitting 14 relative to the front end fitting 15, the rear end fitting 14 being bonded to the rear annular end face of the tube 23.

The aperture of each apertured end fitting 14, 15 comprises a stepped bore. The smallest diameter portion of that stepped bore is the bore of the respective tubular portion 21, 22. The largest diameter portion of that stepped bore is the outermost portion of that stepped bore and it is tapped. The larger of the two intermediate diameter portions of that stepped bore is disposed outwardly with respect to the other of those two intermediate diameter portions of that stepped bore.

An annular insert 24, 25 is screwed into the tapped bore portion of each end fitting 14, 15. Each insert 24, 25 has a stepped radially outer peripheral surface. The largest diameter portion of the stepped peripheral surface of each insert 24, 25 is screw threaded and is engaged within the tapped bore portion of the respective end fitting 14, 15. The remainder of the stepped peripheral surface of each insert 24, 25 forms an intermediate diameter portion and a smallest diameter portion which are spigotted respectively into the larger and smaller intermediate diameter bore portions of the respective end fitting 14, 15. An annular groove is formed in the intermediate diameter portion of the stepped peripheral surface of each insert 24, 25 and accommodates an 'O' ring seal. The bore of each insert 24, 25 is stepped to form two portions of different diameters, the larger diameter portion being disposed outwardly with respect to the other portion which has a slightly larger diameter than does the bore of the tubular portions 21 and 22 of the end fittings 14 and 15.

A piston rod 26 projects from the casing 11 through the apertures of the two apertured end fittings 14 and 15 and is a sliding fit in the bores of the tubular portions 21 and 22 which thereby serve as spaced bearing supports for it.

The front end of the piston rod 26 is formed as an eye 27 for coupling to a draw gear fitting of a tractor vehicle.

The other end of the piston 26 that projects rearwardly from the casing 11 through the rear apertured end fitting 14 is formed as a push rod 28 for imparting brake applying thrust to brake actuating mechanism of the trailer.

A step 29 is formed in that part of the piston rod 26 that is located within the cylindrical chamber that is formed around the piston rod 26 between the tubular portions 21 and 22 of the two end fittings 14 and 15 and within the bore of the tube 23. Hence that portion of the piston rod 26 within the casing 11 comprises a smaller diameter portion 31, which extends through the apertures of the rear apertured end fitting 14 and the annular insert 24, and a larger diameter portion 32 which is a sliding fit within the bore of the tubular portion 22 of the front apertured end fitting 15.

The smaller diameter piston rod portion 31 is spigotted into an annular piston head 33 which abuts the step 29. The rear face of the piston head 33 abuts a sleeve 34 into which the piston rod portion 31 is spigotted as well. The sleeve 34 is a sliding fit within the bore of the tubular portion 21 of the rear apertured end fitting 14, and is extends rearwardly beyond the rear end of the rear end fitting 14 into abutment with a washer 35. The washer 35 is located axially in abutment with the rear end of the sleeve 34 by a nut 36 which is screwed onto the outwardly projecting end portion of the piston rod 26 that forms the push rod 28. Two annular grooves are formed at axially spaced locations in the inner surface of the sleeve 34 and each of those grooves accommodates an 'O' ring seal.

The radially outer surface of the piston head 33 accommodates a piston ring 37 which wipes the bore of the tube 23. Hence the cylindrical chamber formed around the piston rod 26 within the tube 23 and between the end fittings 14 and 15 is divided by the piston head 33 into two cylinder spaces. A Passage 38 is formed through the piston head 33 and a damping orifice 39 of restricted dimensions is formed within the passage 38. The piston ring 37 projects between two bands 40 of bearing material (e.g. polyacetal) which extend circumferentially around the piston head 33 and are a sliding fit within the bore of the tube 23. The bands 40 are mounted on the piston head 33 in such a way that their engagement with the bore of the tube 23 provides further bearing support for the piston rod 26.

The outer surface of each tubular portion 21, 22 of each apertured end fitting 14, 15 is rebated at its inner end. Hence each cylinder space has an annular portion which is formed between the tube 23 and the rebated end portion of the respective tubular portion 21, 22 and which is not filled by the piston head 33 when the piston head 33 is at the end of its stroke in which it abuts that tubular portion 21, 22. The tube 23 is formed with two apertures 41 and 42 which receive removable closure members in the form of set-screws 43 and 44. The aperture 41 communicates with the annular portion of the cylindrical space that is formed around the rebated inner end of the tubular portion 21 of the rear apertured end fitting 14 and the aperture 42 communicates with the annular portion of the cylindrical space that is formed around the rebated inner end of the tubular portion 22 of the front end fitting 15. The apertures 41 and 42 serve as orifices by which the cylinder chamber formed around the piston rod 26 within the tube 23 and between the end fittings 14 and 15 can be filled with hydraulic fluid and bled.

A lip seal ring 45, 46 is located within the annular groove that is formed by the smaller of the two intermediate diameter bore portions of the stepped bore of each apertured end fitting 14, 15 between that end fitting 14, 15 and the inner end of the respective annular insert 24, 25. Each lip seal ring 45, 46 is a special moulding of polyurethane and has its annular groove formed in its side which is nearer to the cylindrical chamber formed around the piston rod 26. An annular scraper seal 47, 48 is housed within the annular cavity formed by the larger diameter bore portion of each annular insert 24, 25, each scraper seal 47, 48 being frusto-conical in the usual manner and tapering outwardly with respect to the casing 11 so that its smaller diameter end is further from the piston head 33 than is its larger diameter end.

The outer surface of the tubular sleeve 34 upon which the lip seal 45 and the scraper seal 47 bear, and the surface of the larger diameter piston rod portion 32 upon which the lip seal 46 and the scraper seal 48 bear are formed with a high quality finish so that the two seals of each pair co-operate with the surface upon which they bear to provide an especially effective fluid tight seal to inhibit leakage of hydraulic fluid from the cylinder chamber. The finish is provided by a process which is similar to that employed to produce a high quality finish for the surfaces of the bores of hydraulic cylinders used in industrial applications, and which comprises the following steps: firstly the surface is ground, then it is polished, the ground and polished surface is then plated with chromium or nickel whereafter the plated surface is ground and finally it is polished. The plating serves to protect the surface against damage due to corrosion.

A housing 49 is fitted to the rear end of the casing 11 around the rearwardly projecting portion of the piston rod 26. The housing 49 is fastened to the rear apertured end member 17 of the cover 13 by setscrews and serves to retain the rear apertured end fitting 14 in position within the cover 13. A readwardly opening space 50 is formed between the housing 49 and the piston rod 26 aft of the rear annular insert 24. The space 50 provides clearance for rectilinear movement of the washer 35 and the nut 36 relative to the housing 49 with movement of the piston 26 relative to the casing 11. A peg 51 is housed within a bore 52, the bore 52 being formed within the housing 49 with its inner end opening into the space 50. The inner end of the bore 52 is spaced from the rear insert 24 by a distance which is greater than the axial length of the washer 35.

The piston rod 26 is movable rectilinearly within the casing 11 for a limited extent. Its stroke is the axial distance between the tubular portions 21 and 22 of the two apertured end fittings 14 and 15, i.e. the axial length of the cylinder chamber in which the piston head 33 is located. Forces are applied to the piston rod 26 and the casing 11 when the apparatus is in use. These forces tend to induce relative movement between the piston rod 26 and the casing 11 unless the piston head 33 and the tubular portion 21, 22 that are urged towards one another by the resultant of these forces are already abutting one another. In most circumstances i.e. except when induced relative movement is very slow, the necessary displacement of hydraulic fluid from one cylinder space to the other through the passage 38 is restricted by the damping orifice 39. Hence the initial shock effect of the applied forces, which either exert a pull on the trailer through the piston rod 26 and the casing 11 or impart a brake applying thrust to the trailer brake actuating mechanism via the push rod 28, and/or the effects of transient variations in the applied forces are damped because of the resistance to the displacement of hydraulic fluid. The bearing support for the piston rod 26 provided by the casing 11 at three axially spaced locations facilitates the provision by the casing 11 of the necessary reaction to the substantial lateral loads to which the piston rod 26 is liable to be subjected in use. Furthermore the hydraulic fluid within the cylindrical chamber lubricates these three areas of bearing support for the piston rod 26 since they are all located between the two lip seals 45 and 46.

The peg 51 is provided to enable the trailer brake mechanism to be rendered inoperative when the coupled tractor vehicle and trailer are reversed. The apparatus is first set, say by pulling the trailer away from the tractor vehicle for as far as it will go without being uncoupled from the tractor vehicle. The peg 51 is then manipulated to its other location in which it projects into the space 50. When located, the peg 51 serves as a stop limiting movement of the washer 35 away from the rear insert 24 and this limits rearwards movement of the piston rod 26 relative to the casing 11 so that the push rod 28 cannot impart brake applying thrust to the trailer brake actuating mechanism.

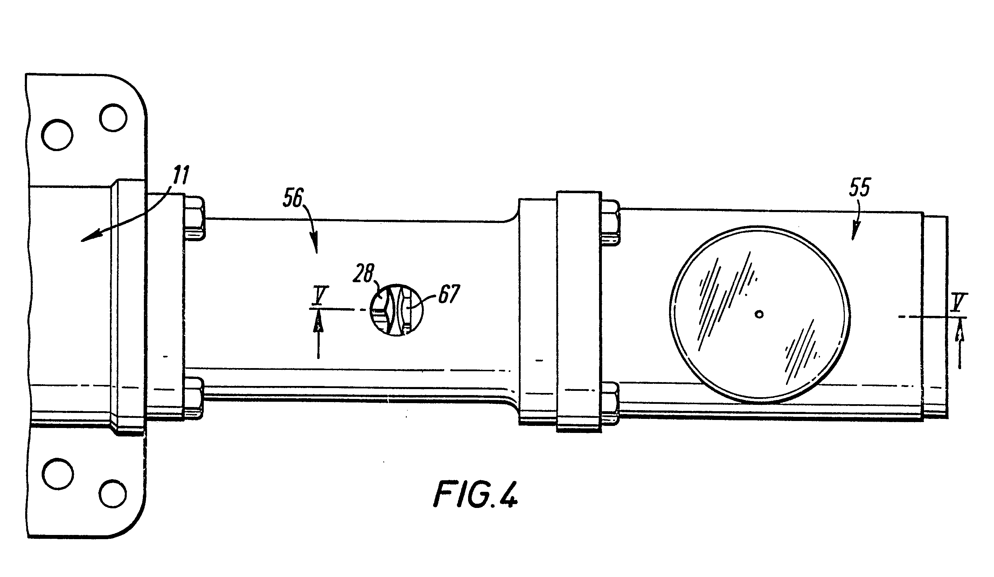

Figure 4 shows a hydraulic master cylinder 55 which is connected to the rear end of the casing 11 in place of the housing 49. The master cylinder 55 is connected to the casing 11 by a tubular connector 56 into which the push rod 28 projects. An inspection hole is formed in the connector 56 at the top.

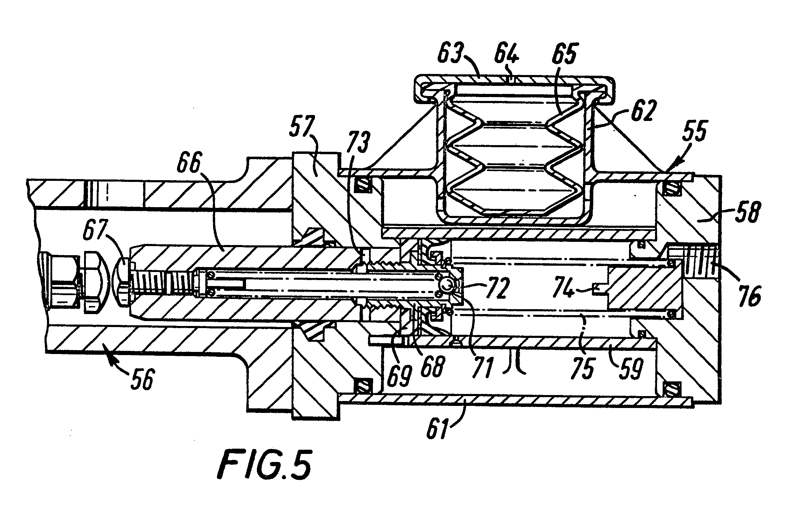

Figure 5 shows that the master cylinder 55 comprises an annular end plate 57, which is bolted coaxially to the end of the connector 56 that is spaced from the casing 11, an apertured end plate 58, and a pair of coaxial tubes 59 and 61 by which the end plates 57 and 58 are spaced apart, each end plate 57, 58 being spigotted into the respective end of each of the tubes 59 and 61. A cup-shaped body 62 is formed integrally with the outer tube 61 at the top of the master cylinder and is provided with apertures by which it communicates with the annular space between two tubes 59 and 61. The brim of the body 62 is closed by a snap fitted cover 63 in which a vent 64 is formed. A bellows 65, which is closed at one end and which has a flange formed at its other open end, is located within the cavity of the body 62 with its flange trapped between the cover 63 and the brim of the body 62.

The bore of the inner tube 59 serves as the master cylinder bore and the annular space between the two tubes 59 and 61, together with the space formed within the body 62 around the bellows 65, comprise the master cylinder reservoir which communicates with the bore of the inner tube 59 through the usual recuperation ports that are formed in that tube 59.

A tubular plunger 66 is a sliding fit in the central aperture of the annular end plate 57. The end of the bore of the plunger 66 adjacent the push rod 28 is closed by a setscrew 67. A ball valve housing 68 is screwed into the other end of the bore of the plunger 66 and carries an annular piston 69 which slides within the inner tube 59. The ball valve seat 71 is formed at the inner end of a port by which the interior of the inner tube 59 communicates with the bore of the plunger 66. The ball valve 72 is spring loaded to seat on the seat 71 and close that port.

A diametral bore 73 through the plunger 66 communicates with the bore of the plunger 66 adjacent the piston 69 and on the side of the piston 69 adjacent the annular end plate 57.

The apertured end plate 58 carries a ball valve unseating pin 74 and provides a seat for a return spring 75 which urges the piston 69 towards the annular end plate 57. The aperture 76 in the end plate 58 communicates with the interior of the inner tube 59 and serves as the master cylinder outlet.

Rearwards movement of the piston rod relative to the casing 11 is transmitted to the plunger 66 via the push rod 28 and the setscrew 67. Hence, the plunger 66 is urged towards the apertured end plate 58, carrying the annular piston 69 with it so that liquid is displaced from within the inner tube 59 through the outlet and the trailer brakes are applied. The return spring 75 ensures that the trailer brakes release when no thrust is imparted to the plunger 66 from the piston rod 26. The distance between the end plates 57 and 58 within the inner tube 59 is greater than the travel of the plunger 66 during service braking of the tractor vehicle. Hence the ball valve 72 remains seated during service braking. However, the plunger 66 is moved sufficiently close to the apertured end plate 58 for the ball 72 to be unseated by the pin 74 when the tractor vehicle is reversed. Hence, the trailer brakes are released for reversing, there being a free passage for liquid through the piston 69 via the ball valve housing port, the bore of the plunger 66 and the diametral bore 73.

The plunger 66 may be pivotally connected to the piston rod 26 or formed integrally with it if desired.

The apparatus described above with reference to and illustrated in Figures 1 to 3 of the drawings comprises a damper piston which is carried by a load carrying rod of trailer drawgear and which is housed within a closed permanently sealed hydraulic pressure chamber.

## Claims

1. A combined tractor and trailer coupling device and trailer brake actuator comprising a casing (11) which is for mounting on the trailer body and within which is formed a cylinder chamber; a piston rod (26) which extends through and projects outwards from both ends of the cylinder chamber and which has one end (27) which is adapted to be coupled to the tractor, the other end (28) serving as a thrust rod for actuating the trailer brake actuating mechanism; and a piston head (33) which is carried by the piston rod (26) within the chamber, which is a sliding fit within the chamber and which divides the chamber into a pair of cylinder spaces having substantially equal cross-sectional areas which are filled with hydraulic fluid and which communicate with one another via a hydraulic fluid flow passage (38) of restricted dimensions through either the piston head (33), the piston rod (26) or the casing (11); the casing (11) forming end walls of the chamber which form spaced bearing supports (21 and 22) for the piston rod (26) and which carry sealing means which co-operate with a sliding surface on the piston rod (26) to form a fluid seal at either end of the chamber; characterised in that the sealing means co-operate with the sliding surface on the piston rod (26) to provide a fluid tight seal which inhibits leakage of any hydraulic fluid from the cylinder chamber so that the chamber is a closed leak free chamber, the chamber being permanently-filled with hydraulic fluid and being bled to remove all air therefrom, the sealing means at either end of the chamber comprising an annular polyurethane lip seal (45, 46) which bears on the sliding surface of the piston rod (26) and which has an annular groove formed in its side which is nearer to the chamber, said sliding surface being formed with a high quality finish so that hydraulic fluid does not leak past the lip seal (45, 46).

2. A combined tractor and trailer coupling device according to Claim 1, wherein the whole of said spaced bearing supports (21 and 22) are disposed between the sealing means carried by the end walls of the chamber.

3. A combined tractor and trailer coupling device according to Claim 2, wherein the cylinder wall (23) of the chamber provides a bearing support for the piston head (33) so that the casing (11) provides bearing support for the piston rod (26) at three spaced locations between the sealing means carried by the end walls of the chamber.

4. A combined tractor and trailer coupling device and trailer brake actuator according to any one of Claims 1 to 3, wherein the sealing means carried by each end wall further comprise an annular scraper seal (47, 48), the polyurethane lip seal (45, 46) being nearer to the chamber than is the scraper seal (47, 48), and the smaller diameter end portion of the scraper seal (47, 48) that bears on the piston rod (26) being at the outer end of that scraper seal (47, 48).

5. A combined tractor and trailer coupling device and trailer brake actuator according to Claim 4, wherein the sliding surface on the piston rod (26) against which each polyurethane lip seal (45, 46) bears is a polished surface formed by a plating of corrosion resistant material.

6. A combined tractor and trailer coupling device and trailer brake actuator according to any one of Claims 1 to 5, wherein said other end (28) co-operates with a master cylinder piston (69) which slides within a bore of a master cylinder (55) of a hydraulic trailer brake actuating system.

7. A combined tractor and trailer coupling device and trailer brake actuator according to Claim 6, wherein said other end (28) of the piston rod (26) is separate from the master cylinder piston (69) and is adapted to abut it to impart brake applying thrust to it.

8. A combined tractor and trailer coupling device and trailer brake actuator according to Claim 6 or 7, wherein a normally closed valve (72) is provided in a passage (71 and 73) through the master cylinder piston (69) and means (74) are provided to open said valve (72) when the tractor vehicle is being reversed.

9. A combined tractor and trailer coupling device and trailer brake actuator according to Claim 6, Claim 7 or Claim 8, wherein the master cylinder (55) comprises a coaxial pair of tubes (59 and 61) extending between and annular end plate (57) and an apertured end plate (58), the bore of the inner tube (59) comprising the master cylinder bore and the outer tube (61) carrying a hollow body (62) which contains a bellows (65) and which has apertures by which the space within it outside the bellows (65) communicates with the annular space between the tubes (59 and 61), the interior of the bellows (65) being vented to atmosphere and the space within the body (62) outside the bellows (65) together with the annular space serving as a reservoir of the master cylinder (55).

## Revendications

1. Dispositif d'accouplement combiné pour tracteur et remorque et dispositif d'actionnement de frein de remorque comprenant une enveloppe (11) pour montage sur la caisse de la remorque et dans lequel une chambre de cylindre est prévue; une tige de piston (26) qui passe par la chambre de cylindre et en dépasse vers l'extérieur aux deux extrémités, et qui est dotée d'une extrémité (27) qui est adaptée à l'accouplement avec le tracteur, tandis que l'autre extrémité (28) sert de tige de poussée pour actionner le mécanisme actionneur de frein de remorque, et une tête de piston (33) qui est supportée par la tige de piston (26) à l'intérieur de la chambre, qui s'emboîte par glissement dans la chambre, et qui divise la chambre en une paire d'espaces de cylindre ayant des surfaces transversales substantiellement égales qui sont remplies de fluide hydraulique et qui sont en communication l'une avec l'autre par l'entremise d'un canal d'écoulement (38) de fluide hydraulique de dimensions restreintes passant par soit la tête de piston (33), la tige de piston (26) ou l'enveloppe (11); l'enveloppe (11) constituent des parois d'extrémité de la chambre qui constituent des supports espacés (21 et 22) pour la tige de piston (26) et qui portent des moyens d'étanchéité qui collaborent avec une surface de glassement sur la tige de piston (26) pour former un moyen d'étanchéité de fluide à chaque extrémité de la chambre, caractérisé en ce que les moyens d'étanchéité collaborent avec la surface de glissement sur la tige de piston (26) pour donner un joint étanche qui empêche les fuites de tout fluide hydraulique provenant de la chambre de cylindre, de sorte que la chambre est une chambre fermée étanche, la chambre étant remplie en permanence de fluide hydraulique et étant purgée pour en extraire tout l'air, les moyens d'étanchéité à l'une ou l'autre extrémité de la chambre comprenant un joint à lèvre annulaire en polyuréthane (45, 46) qui s'appuie sur la surface coulissante de la tige de piston (26) et qui est doté d'une rainure annulaire formée sur son côté qui est le plus rapproché de la chambre, ladite surface de glissement étant dotée d'une finition de haute qualité de sorte que le fluide hydraulique ne s'écoule pas au-delà du joint à lèvre (45, 46).

2. Dispositif d'accouplement combiné pour tracteur et remorque selon la revendication 1, dans lequel la totalité desdits supports espacés (21 et 22) est disposée entre les moyens d'étanchéité supportés par les parois d'extrémités de la chambre.

3. Dispositif d'accouplement combiné pour tracteur et remorque selon la revendication 2, dans lequel la paroi de cylindre (23) de la chambre fournit un palier de support pour la tête de piston (33) de sorte que l'enveloppe (11) assure un support pour la tige de piston (26) en trois emplacements espacés entre les moyens, d'étanchéité supportés par les parois d'extrémité de la chambre.

4. Dispositif d'accouplement combiné pour tracteur et remorque et dispositif d'actionnement de frein de remorque selon l'une ou l'autre des revendications 1 à 3, dans lequel les moyens d'étanchéité supportés par chaque paroi d'extrémité comprennent en outre un joint racleur annulaire (47, 48), le joint à lèvre en polyuréthane (45, 46) étant plus rapproché de la chambre que ne l'est le joint racleur (47, 48), et la partie terminale à plus petit diamètre du joint racleur (47, 48) qui s'appuie sur la tige de piston (26) étant située à l'extrémité extérieure dudit joint racleur (47, 48).

5. Dispositif d'accouplement combiné pour tracteur et remorque et dispositif d'actionnement de frein de remorque selon la revendication 4 dans lequel la surface coulissante sur la tige de piston (26) contre laquelle chaque joint à lèvre en polyuréthane (45, 46) s'appuie est une surface polie constituée par un revêtement de matériau résistant à la corrosion.

6. Dispositif d'accouplement combiné pour tracteur et remorque et dispositif d'actionnement de frein de remorque selon n'importe laquelle des revendications 1 à 5, dans lequel ladite autre extrémité (28) collabore avec un piston de cylindre principal (69) qui coulisse à l'intérieur d'un alésage d'un cylindre principal (55) d'un système hydraulique d'actionnement de frein de remorque.

7. Dispositif d'accouplement combiné pour tracteur et remorque et dispositif d'actionnement de frein de remorque selon la revendication 6, dans lequel ladite autre extrémité (28) de la tige de piston (26) est séparée du piston de cylindre principal (69) et est prévue pour buter contre lui pour lui communiquer une poussée d'application de frein.

8. Dispositif d'acouplement combiné pour tracteur et remorque et dispositif d'actionnement de frein de remorque selon la revendication 6 ou la revendication 7, dans lequel une soupape normalement fermée (72) est prévue dans un passage (71 et 73) par le piston de cylindre principal (69) et des moyens (74) sont prévus pour l'ouverture de ladite soupape (72) lorsque le véhicule tracteur fait marche arrière.

9. Dispositif d'accouplement combiné pour tracteur et remorque et dispositif d'actionnement de frein de remorque selon la revendication 6, la revendication 7 ou la revendication 8, dans lequel le cylindre principal (55) comprend une paire co-axiale de tubes (59 et 61) s'étendant au-delà d'une plaque annulaire d'extrémité (57) et une plaque d'extrémité à ouverture (58), l'alésage du tube intérieur (59) comprenant l'alésage de cylindre principal et le tube extérieur (61) supportant un corps creux (62) qui contient un soufflet (65) et qui a des ouvertures au moyen desquelles l'espace dans lui à l'extérieur du soufflet (65) est en communication avec l'espace annulaire entre les tubes (59 et 61), l'intérieur du soufflet (65) étant mis à l'air libre et l'espace à l'intérieur du corps (62) hors du soufflet (65) en association avec l'espace annulaire servant de réservoir pour le cylindre principal (55).

## Patentansprüche

1. Kombinierte Zugmaschinen- und Anhängerkupplungsvorrichtung und Anhängerbremsen-Betätigungseinrichtung mit zur Befestigung am Anhängeraufbau bestimmten Gehäuse (11), in dem eine Zylinderkammer gebildet ist, mit einer Kolbenstange (26), die sich durch die Zylinderkammer sowie von beiden Seiten derselben erstreckt, wobei ein Ende (27) zum Anschluss an die Zugmaschine ausgebildet ist und das andere Ende (28) als Druckstange zur Betätigung der Anhängerbremsen-Betätigungseinrichtung dient, mit einem Kolbenkopf (33) der innerhalb der Kammer von der Kolbenstange (28) getragen wird, innerhalb der Kammer mit Schiebesitz geführt wird und die Kammer in ein Paar von Zylinderkammern mit wesentlich gleicher Querschnittsfläche unterteilt, wobei besagte zylinderkammern mit Hydraulikflüssigkeit gefüllt sind und miteinander über ein entweder durch den Kolbenkopf (33) oder durch die Kolbenstange (26) bzw. durch das Gehäuse führenden Hydraulikflüssigkeitskanal mit gedrosselten Abmessungen miteinander verbunden sind, wobei das Gehäuse (11) Kammerstirnwände bildet, die im Abstand von einander angeordnete Lagerstützen (21 und 22) für die Kolbenstange darstellen und Dichtungseinrichtungen tragen, die mit einer Schiebefläche der Kolbenstange zusammenarbeiten, um eine Flüssigkeitsdichtung an beiden Kammerenden zu bilden, dadurch gekennzeichnet, dass die Dichtungseinrichtung mit der Schiebefläche der Kolbenstange (26) zusammenarbeitet, um eine flüssigkeitsdichte Dichtung zu bilden, die jegliches Lecken von Hydraulikflüssigkeit von der Zylinderkammer verhindert, sodass die Kammer eine geschlossene, leckfreie Kammer ist, die dauernd mit Hydraulikflüssigkeit gefüllt ist, und zum Entfernen jeglicher darin enthaltenen Luft entlüftet ist, wobei die Dichtungseinrichtung an beiden Enden der Kammer aus einer ringförmigen PU-Lippendichtung (45, 46) besteht, die an der Schiebefläche der Kolbenstange (26) anliegt und auf ihrer zur Kammer weisenden Seite mit einer Ringnute versehen ist, wobei die Schiebefläche mit hoher Oberflächengüte ausgebildet ist, um Vorbeilecken der Hydraulikflüssigkeit an der Lippendichtung (45, 46) zu verhindern.

2. Kombinierte Zugmaschinen- und Anhängerkupplungsvorrichtung nach Anspruch 1, dadurch gekennzeichnet, dass die gesamten im Abstand von einander angeordneten Lagerstützen (21 und 22) zwischen den von den Kammerstirnwänden getragenen Dichtungseinrichtungen angeordnet sind.

3. Kombinierte Zugmaschinen- und Anhängerkupplungsvorrichtung nach Anspruch 2, dadurch gekennzeichnet, dass die Zylinderwand (23) der Kammer als lagerstütze für den Kolbenkopf (33) wirkt, so dass das Gehäuse (11) an drei von einander entfernten Stellen zwichen den von den Kammerstirnwänden getragenen Dichtungseinrichtungen eine Lagerstütze für die Kolbenstange (26) vorsieht.

4. Kombinierte Zugmaschinen- und Anhängerkupplungsvorrichtung und Anhängerbremsen-Betätigungseinrichtung nach einem der Anspruche 1 bis 3, dadurch gekennzeichnet, dass die von jeder Stirnwand getragene Dichtungseinrichtung weiterhin aus einer ringförmigen Abstreifdichtung (47, 48) besteht, wobei die PU-Lippendichtung (45, 46) im Gegensatz zur Abstreifdichtung (47, 48) näher der Kammer gelegen ist und der Endteil mit kleinerem Durchmesser der Abstreifdichtung (47, 48) der an der Kolbenstange (26) anliegt, sich am äusseren Ende der Abstreifdichtung (47, 48) befindet.

5. Kombinierte Zugmaschinen- und Anhängerkupplungsvorrichtung und Anhängerbremsen-Betätigungseinrichtung nach Anspruch 4, dadurch gekennzeichnet, dass die an der Kolbenstange (26) befindliche Schiebefläche, an der jede PU-Lippendichtung (45, 46) anliegt, eine polierte Fläche ist, die durch Auftragung eines korrosionswiderständigen Materials gebildet ist.

6. Kombinierte Zugmaschinen- und Anhängerkupplungsvorrichtung und Anhängerbremsen-Betätigungseinrichtung nach einem der Ansprüche 1 bis 5 dadurch gekennzeichnet, dass das besagte andere Ende (28) mit einem Hauptzylinder-Kolben (69) zusammenarbeitet, der in der Bohrung des Hauptzylinders eines hydraulischen Anhängerbremsen-Betätigungssystems verschieblich gelagert ist.

7. Kombinierte Zugmaschinen- und Anhängerkupplungsvorrichtung und Anhängerbremsen-Betätigungseinrichtung nach Anspruch 6, dadurch gekennzeichnet, dass das besagte andere Ende (28) der Kolbenstange (26) vom Hauptzylinder-Kolben (69) getrennt und derart anstossend angeordnet ist, dass es Druck zum Anlegen der Bremse aufbringt.

8. Kombinierte Zugmaschinen- und Anhängerkupplungsvorrichtung und Anhängerbremsen-Betätigungseinrichtung nach Anspruch 6 oder 7, dadurch gekennzeichnet, dass ein normalerweise geschlossenes Ventil (72) in einem durch den Hauptzylinder-Kolben (69) führenden Kanal (71 und 73) sowie Mittel (74) zum Öffnen des des besagten Ventils (72) bei rückfahrender Zugmaschine vorgesehen sind.

9. Kombinierte Zugmaschinen- und Anhängerkupplungsvorrichtung und Anhängerbremsen-Betätigungsvorrichtung nach Anspruch 6, 7 oder 8, dadurch gekennzeichnet, dass der Hauptzylinder (55) aus einem Koaxialangeordnetem Paar Rohren (59 und 61) besteht, die sich zwischen einer ringförmigen Stirnplatte (57) und einer mit Öffnungen versehenen Stirnplatte (58) erstrecken, wobei die Bohrung des inneren Rohrs (59) die Bohrung des Hauptzylinders bildet und das äussere Rohr (61), welches einen Hohlkörper (62) trägt, der einen Balg (65) enthält und mit Öffnungen versehen ist, durch die der Innenraum ausserhalb des Balgs (65) mit dem ringförmigen Raum zwischen den Rohren (59 und 61) in Verbindung steht, wobei der Innenraum des Balgs (65) zur Atmosphäre entlüftet ist und der Raum innerhalb des Körpers (62) und ausserhalb des Balgs (65) in Zusammenwirkung mit dem ringförmigen Raum als Flüssigkeitsbehälter des Hauptzylinders (55) dient.

FIG.1

0 0008 222

FIG.2

0 008 222

*FIG.3*

FIG.4

FIG.5

0008 222